# EUROPÄISCHE PATENTANMELDUNG

(11) **EP 1 923 805 A1**
(43) Veröffentlichungstag der Anmeldung: **21.05.2008**
(21) Anmeldenummer: 06024055.3
(22) Anmeldetag: 20.11.2006
(51) Int. Cl.: G06F 19/00, G01D 5/20

(54) **Positionsmess-und Positionsstellsystem mit drahtloser Datenübermittlung**

(71) Anmelder: Baumer IVO GmbH & Co. KG, 78056 Villingen-Schwenningen (DE)
(72) Erfinder: Brügger, Peter, 8500 Frauenfeld (CH); Rapp, Günter, 78647 Trossingen (DE); Schuff, Johannes, 78052 Villingen-Schwenningen (DE)
(74) Vertreter: Grünecker, Kinkeldey, Stockmair & Schwanhäusser Anwaltssozietät

(57) **Zusammenfassung**

Die Erfindung betrifft eine Positionsmessvorrichtung zur Erfassung von Positionsmesswerten einer Welle, umfassend: eine Positionsmessvorrichtungs-Schnittstelle, die zum drahtlosen Senden von Daten an ein Stellwerkwerkzeug ausgebildet ist. Weiterhin betrifft die Erfindung ein Stellwerkzeug zum Einstellen der Position einer Welle, umfassend: eine Stellwerkzeug-Schnittstelle, die zum drahtlosen Empfangen von Daten von einer Positionsmessvorrichtung ausgebildet ist. Zudem betrifft die Erfindung ein System, das mehrere erfindungsgemäße Positionsmessvorrichtungen und ein erfindungsgemäßes Stellwerkzeug umfasst.

## Beschreibung

### Gebiet der Erfindung

Die Erfindung betrifft eine Positionsmessvorrichtung zur Erfassung von Positionsmesswerten einer Welle und ein Stellwerkzeug zum Einstellen der Position der Welle, sowie ein System aus mehreren Positionsmessvorrichtungen und einem Stellwerkzeug.

### Stand der Technik

In der Automatisierungstechnik werden häufig als Gewindespindeln ausgebildete Wellen eingesetzt. Diese sind Maschinenelemente, die zusammen mit anderen Elementen dazu dienen, eine drehende Bewegung in eine lineare Bewegung umzuwandeln. Gewindespindeln bestehen aus einem zylindrischen Rundstab, auf dem ein Gewinde aufgebracht ist.

Zur Messung der Position einer solchen Welle bzw. Spindel existieren Positionsmessvorrichtungen, die in diesem Zusammenhang auch Spindelpositionsanzeigen genannt werden, worin ein Drehgeber die Drehbewegung der Welle erfasst und einen inkrementalen oder/und absoluten Positionsmesswert ausgibt, der die Stellung der Welle kennzeichnet. Für Erfassungsbereiche von mehr als einer Umdrehung bieten sich Multiturn-Drehgeber an.

Die Spindelpositionsanzeigen dienen der elektronischen Unterstützung der manuellen Spindelpositionierung. In Werkzeugmaschinen oder Produktionsanlagen kommen oft mehrere Spindeln mit jeweils einer Positionsmessvorrichtung zum Einsatz.

Spindelpositionsanzeigen mit einem integrierten getriebelosen Multiturn-Absolutdrehgeber können für die Hohlwellenmontage ausgelegt sein, d.h. sie können direkt auf der jeweiligen Spindel aufgesteckt werden. Weiterhin können die Spindelpositionsanzeigen so ausgebildet sein, dass sie direkt mit einem DC-Getriebemotor kommunizieren, der dann die Spindeln entsprechend den Vorgaben verstellt. Dieser Verstellmotor kann auch abgesetzt von der Positionsanzeige montiert werden, z.B. am anderen Ende der Spindel, wobei ein Kabel oder ein Bussystem für die Datenübermittlung zwischen einer Spindelpositionsanzeige und dem zugehörigen Motor vorgesehen ist.

Spindelpositionsanzeigen gibt es in sehr kompakten Baugrößen, die sich auch für Anlagen und Maschinen eignet, bei denen das Raumangebot knapp ist, beispielsweise für Werkzeugmaschinen, Verpackungsanlagen oder für Einsatzfälle in der Elektronikfertigung und im grafischen Maschinenbau.

Bei Formatanpassungen an Verpackungsmaschinen wird der Grad der Automatisierung ausschließlich vom Kosten-/Nutzenverhältnis bestimmt. Nur wenn Achsen, Spindeln oder Anschläge häufig verstellt werden, lohnen sich beispielsweise durchgehend über ein Bussystem vernetzte Antriebe. Selbst bei kurzen Produktionszyklen und häufigem Produktwechsel müssen jedoch nicht zwangsläufig immer alle Spindeln einer Maschine gleich oft verstellt werden. In solchen Fällen kann es Kosten sparen, Spindeln deren Position sich nur selten ändert, manuell einzustellen und dort auf einen Stellantrieb zu verzichten.

Ist- und Sollwerte für die Verstellung sowie die Drehrichtung für die manuelle Verstellung werden dabei in der Regel auf einem Display der Spindelpositionsanzeige angezeigt.

Bei einem derartigen System können die Spindeln durch ein Dreh-Werkzeug wie etwa einen Aukkuschrauber, der direkt am Ende der Welle angesetzt wird, eingestellt werden. Eine Einstellung erfolgt dabei durch eine Bedienungsperson mit Sichtkontakt auf die jeweilige Spindelpositionsanzeige. Diese Vorgehensweise jedoch naturgemäß fehlerbehaftet und dahingehend nachteilig.

Eine andere Vorgehensweise besteht darin, das Dreh-Werkzeug mit einer Verkabelung an das Bussystem der Spindelpositionsanzeige zu koppeln, wobei das Dreh-Werkzeug durch die Spindelpositionsanzeige gesteuert wird. Auch dieses ist nachteilig, da das Dreh-Werkzeug einzeln mit der jeweiligen Spindelpositionsanzeige über ein Kabel verbunden werden muss. Zudem kann sich bei der Handhabung des Dreh-Werkzeugs das Kabel als hinderlich erweisen.

### Beschreibung der Erfindung

Es ist die Aufgabe der Erfindung, die oben genannten Nachteile zu vermeiden, insbesondere, eine Positionsmessvorrichtung, ein Stellwerkzeug und ein System aus mehreren Positionsmessvorrichtungen und einem Stellwerkzeug zur Verfügung zu stellen, das eine einfache Handhabung bei der exakten Einstellung von Wellenpositionen ermöglicht.

Diese Aufgabe wird gelöst durch eine Positionsmessvorrichtung, die sich durch eine Positionsmessvorrichtungs-Schnittstelle auszeichnet, welche zum drahtlosen Senden von Steuersignalen und/oder Daten an ein Stellwerkwerkzeug ausgebildet ist.

Weiterhin wird diese Aufgabe gelöst durch ein Stellwerkzeug, das sich durch eine Stellwerkzeug-Schnittstelle auszeichnet, welche zum drahtlosen Empfangen von Steuersignalen und/oder Daten von einer Positionsmessvorrichtung ausgebildet ist.

Mit einer derartigen erfindungsgemäßen Positionsmessvorrichtung und einem derartigen erfindungsgemäßen Stellwerkzeug können Positions- und/oder Steuerdaten von der Positionsmessvorrichtung über die Positionsmessvorrichtungs-Schnittstelle und über die Stellwerkzeug-Schnittstelle drahtlos zu dem Stellwerkzeug übertragen werden. Somit wird keine aufwändige und/oder hinderliche Verkabelung zwischen der Positionsmessvorrichtung und dem Stellwerkzeug benötigt. Das Stellwerkzeug ist vorzugsweise leicht und somit tragbar und einfach zu handhaben. Insbesondere kann das Stellwerkzeug so ausgebildet sein, dass es durch den Empfang von Steuersignalen aktiviert wird, und/oder dass bei einem Ausbleiben von Steuersignalen von der Positionsmessvorrichtung keine Stellung erfolgen kann.

Vorteilhafte Weiterbildungen der erfindungsgemäßen Positionsmessvorrichtung und dem erfindungsgemäßen Stellwerkzeug werden nachfolgend beschrieben.

Eine Weiterbildung der erfindungsgemäßen Positionsmessvorrichtung besteht darin, dass die Positionsmessvorrichtungs-Schnittstelle weiterhin zum drahtlosen Empfangen von Daten von dem Stellwerkzeug ausgebildet sein kann. Eine Weiterbildung des erfindungsgemäßen Stellwerkzeugs besteht darin, dass die Stellwerkzeug-Schnittstelle weiterhin zum drahtlosen Senden von Steuersignalen und/oder Daten an die Positionsmessvorrichtung ausgebildet sein kann. Somit können auch Steuersignale und/oder Daten von dem Stellwerkzeug zur Positionsmessvorrichtung übertragen werden. Diese Daten können beispielweise für das Stellwerkzeug charakteristische Gerätedaten umfassen.

Eine Weiterbildung der erfindungsgemäßen Positionsmessvorrichtung besteht darin, dass die Positionsmessvorrichtung weiterhin zum Senden einer Identifikation der Positionsmessvorrichtung und/oder eines Ist-Werts der Wellenposition und/oder eines Soll-Werts der Wellenposition über die Positionsmessvorrichtungs-Schnittstelle an das Stellwerkzeug ausgebildet sein kann. Eine Weiterbildung des erfindungsgemäßen Stellwerkzeugs besteht darin, dass das Stellwerkzeug weiterhin zum Empfangen einer Identifikation der Positionsmessvorrichtung und/oder von Positionsmesswerten und/oder eines Ist-Werts der Wellenposition und/oder eines Soll-Werts der Wellenposition von der Positionsmessvorrichtung über die Stellwerkzeug-Schnittstelle und/oder deren Speicherung ausgebildet sein kann. Mit diesen Weiterbildungen kann die Einstellung der Wellenposition abhängig von der Differenz des Ist-Wertes und des Soll-Wertes oder dessen Betrag erfolgen. Beispielsweise kann die Stellgeschwindigkeit des Stellwerkzeugs auf diese Weise reduziert werden, wenn sich der lst-Wert dem Soll-Wert annähert. Weiterhin kann sich in dieser Weiterbildung die Positionsmessvorrichtung gegenüber dem Stellwerkzeug mittels der gesendeten Identifikation identifizieren. Insbesondere kann diese Identifikation eine Adresse der Welle sein, dessen Position durch die Positionsmessvorrichtung erfasst wird.

Eine Weiterbildung der erfindungsgemäßen Positionsmessvorrichtung besteht darin, dass die Positionsmessvorrichtung zum Übertragen von Steuersignalen für einen Linkslauf und/oder einen Rechtslauf und/oder eine Geschwindigkeit über die Positionsmessvorrichtungs-Schnittstelle an das Stellwerkzeug ausgebildet sein kann. Eine Weiterbildung des erfindungsgemäßen Stellwerkzeugs besteht darin, dass das Stellwerkzeug dazu ausgebildet sein kann, bei Empfang von Steuersignalen für einen Linkslauf und/oder einen Rechtslauf und/oder eine Geschwindigkeit von der Positionsmessvorrichtung die Einstellung der Position der Welle entsprechend vorzunehmen. Mittels dieser Weiterbildungen kann die Einstellung der Wellenposition in einer geeigneten Richtung und/oder mit einer geeigneten Geschwindigkeit vorgenommen werden. Dabei können die Steuerdaten für die Stellgeschwindigkeit des Stellwerkzeugs zeitlich variabel sein, beispielsweise kann die Stellgeschwindigkeit bei Annäherung an die erwünschte Wellenposition reduziert werden.

Eine Weiterbildung der erfindungsgemäßen Positionsmessvorrichtung besteht darin, dass die Positionsmessvorrichtung eine Anzeigevorrichtung zur Anzeige der Positionsmesswerte und/oder des Ist-Werts und/oder des Soll-Werts umfassen kann. Diese Weiterbildung ist dahingehend vorteilhaft, dass eine Sichtkontrolle der eingestellten Positionen durch eine Bedienungsperson erfolgen kann.

Eine Weiterbildung des erfindungsgemäßen Stellwerkzeugs besteht darin, dass das Stellwerkzeug eine Anzeigevorrichtung zur Anzeige der Identifikation der Positionsmessvorrichtung und/oder der Positionsmesswerte und/oder des Ist-Werts und/oder des Soll-Werts umfassen kann. Auf diese Weise kann eine Bedienperson das Stellwerkzeug anhand von auf der Anzeigevorrichtung des Stellwerkzeugs angezeigten Daten von Hand steuern, ohne dass dabei einen Sichtkontakt zur Positionsmessvorrichtung erforderlich wäre. Weiterhin kann durch Anzeige der Identifikation der Positionsmessvorrichtung gewährleistet werden, dass die richtige Welle eingestellt wird.

Eine Weiterbildung der erfindungsgemäßen Positionsmessvorrichtung besteht darin, dass die Positionsmessvorrichtung zur Erfassung von Positionsmesswerten einer Spindel, insbesondere einer Trapezspindel oder einer Kugelrollspindel geeignet sein kann, die zur Verstellung eines Maschinenelements dient. Mit dieser Weiterbildung können Spindeln, die z.B. üblicherweise in einer Fertigungsmaschine eingesetzt werden, positioniert werden. Dabei können charakteristische Parameter der Spindel (z.B. die Steigung der Spindel, usw.) in der Positionsmessvorrichtung abgespeichert sein.

Eine Weiterbildung des erfindungsgemäßen Stellwerkzeugs besteht darin, dass das Stellwerkzeug ein motorbetriebenes Dreh-Element umfassen kann. Mit dieser Weiterbildung wird eine vorteilhafte Ausführung des Stellwerkzeugs zur Verfügung gestellt, da die Drehbewegung des Stellwerkzeugs einfach in eine Drehbewegung der Welle umgesetzt werden kann.

Eine Weiterbildung des erfindungsgemäßen Stellwerkzeugs besteht darin, dass das Stellwerkzeug ein Akkuschrauber (120; 220) sein kann. Bei dieser Weiterbildung kann ein allgemein verfügbares, kostengünstiges Stellwerkzeug in Form eines Akkuschraubers eingesetzt werden, der lediglich um die Stellwerkzeug-Schnittstelle erweitert ist. Weiterhin hat ein Akkuschrauber den Vorteil, dass eine Zuleitung zur Energieversorgung dessen Motors nicht erforderlich ist.

Eine Weiterbildung der erfindungsgemäßen Positionsmessvorrichtung besteht darin, dass die Positionsmessvorrichtung zum Anordnen an einer beliebigen Stelle der Welle ausgebildet sein kann. Diese Weiterbildung ist dahingehend vorteilhaft, dass die Positionsmessvorrichtung an einer konstruktiv günstigen Stelle entlang der Welle, insbesondere leicht zugänglich und/oder den Aufbau einer Maschine nicht störend angeordnet werden kann.

Eine Weiterbildung des erfindungsgemäßen Stellwerkzeugs besteht darin, dass das Stellwerkzeug an ein Ende der Welle koppelbar sein kann. Mit dieser Weiterbildung wird eine einfache Ausgestaltung der Kopplung des Stellwerkzeugs mit der Welle zur Verfügung gestellt. Beispielsweise kann das Ende der Welle eine Mehrkantform (z.B. Vierkant- oder Sechskantform) oder eine sonstige Form aufweisen auf die das Stellwerkzeug aufgesetzt wird, wobei das Stellwerkzeug mit einem entsprechenden, komplementär geformten Gegenstück versehen ist.

Eine Weiterbildung der erfindungsgemäßen Positionsmessvorrichtung besteht darin, dass die Positionsmessvorrichtungs-Schnittstelle als Funk-Schnittstelle und/oder Infrarot-Schnittstelle und/oder Bluetooth-Schnittstelle ausgebildet sein kann. Eine Weiterbildung des erfindungsgemäßen Stellwerkzeugs besteht darin, dass die Stellwerkzeug-Schnittstelle als Funk-Schnittstelle und/oder Infrarot-Schnittstelle und/oder Bluetooth-Schnittstelle ausgebildet sein kann. Diese Weiterbildungen haben den Vorteil, dass kostengünstige Standard-Schnittstellen zur drahtlosen Steuersignal- und/oder Datenübermittlung eingesetzt werden können.

Eine Weiterbildung der erfindungsgemäßen Positionsmessvorrichtung besteht darin, dass die Positionsmessvorrichtung zum Einbinden in ein drahtloses Kommunikationsnetzwerk ausgebildet sein kann. Eine Weiterbildung des erfindungsgemäßen Stellwerkzeugs besteht darin, dass das Stellwerkzeug zum Einbinden in ein drahtloses Kommunikationsnetzwerk ausgebildet sein kann. Der Vorteil dieser Weiterbildungen besteht darin, dass die Positionsmessvorrichtung nicht nur mit dem Stellwerkzeug sondern auch mit weiteren erfindungsgemäßen Positionsmessvorrichtungen und ggf. ebenso mit einem übergeordneten System Steuersignale und/oder Daten austauschen können. Dadurch ist es beispielsweise möglich einen vorgegebenen ganzen Satz von Positionseinstellungen für mehrere Wellen zu übermitteln und in den Positionsmessvorrichtungen abzulegen (z.B. für ein bestimmtes Format in einer Verpackungsmaschine). Weiterhin kann damit vorgesehen sein, dass nur jeweils eine der Positionsmesseinrichtungen das Stellwerkzeug ansprechen kann.

Eine andere Weiterbildung des erfindungsgemäßen Positionsmessvorrichtung besteht darin, dass die Positionsmessvorrichtung ein Drehgeber, insbesondere ein Multiturn-Drehgeber sein kann. Mit dieser Weiterbildung ist es möglich, bekannte und zuverlässige Positionsmessvorrichtungen für Drehwinkel einzusetzen. Derartige Drehgeber, in spezieller Ausgestaltung auch als Spindelpositionsanzeigen bekannt, liefern Auflösungen des Drehwinkels bis zu einigen Tausend Schritten pro Umdrehung und können in jeder Drehrichtung bis zu einige Tausend vollständige Umdrehungen erfassen.

Die oben genannte Aufgabe wird zudem gelöst durch ein System welches mehrere erfindungsgemäße Positionsmessvorrichtungen und/oder deren Weiterbildungen sowie ein erfindungemäßes Stellwerkzeug und/oder dessen Weiterbildungen umfasst.

Der Vorteil des erfindungsgemäßen Systems besteht darin, lediglich ein Stellwerkzeug für die Einstellung der Positionen von mehreren Wellen eingesetzt werden kann. Dabei können mittels drahtloser Datenübertragung Steuersignale und/oder Daten von einer zur jeweiligen Welle gehörigen Positionsmessvorrichtung zum Stellwerkzeug übertragen werden.

Eine Weiterbildung des erfindungsgemäßen Systems besteht darin, dass eine Zuordnung des Stellwerkzeugs zur jeweiligen Positionsmessvorrichtung über eine Signalstärke der drahtlosen Steuersignal- und/oder Datenübertragung und/oder über eine ldentifikations-Kodierung der jeweiligen Positionsmessvorrichtung und/oder durch ein Anschalten der jeweiligen Positionsmessvorrichtungs-Schnittstelle herstellbar sein kann.

Mit dieser Weiterbildung und den darin aufgeführten Optionen ist eine einfache Zuordnung des Stellwerkzeugs zu einer bestimmten Positionsmessvorrichtung möglich. Beispielsweise kann diese Zuordnung derart erfolgen, dass über die Signalstärke das Stellwerkzeug der nächstliegenden Positionsmessvorrichtung zugeordnet wird und von dieser Steuersignale und/oder Daten empfängt. Weiterhin kann sich jede Positionsmessvorrichtung durch eine Kodierung dem Stellwerkzeug gegenüber identifizieren, wobei dann eine Auswahl der Positionsmessvorrichtung, von der Steuersignale und/oder Daten empfangen werden sollen, über eine entsprechende Auswahl am Stellwerkzeug erfolgen kann. Ein andere Option besteht darin, dass jede Positionsmessvorrichtung eine Schaltmöglichkeit aufweist, wodurch die Positionsmessvorrichtungs-Schnittstelle der Positionsmessvorrichtung zur Steuersignal- und/oder Datenübertragung an die Stellwerkzeug-Schnittstelle angeschaltet wird.

Die verschiedenen Weiterbildungen lassen sich unabhängig voneinander einsetzen bzw. geeignet miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1a und 1b: zeigen eine erste Ausführungsform der erfindungsgemäßen Positionsmessvorrichtung, des erfindungsgemäßen Stellwerkzeugs und des erfindungsgemäßen Systems.
- Fig. 2a und 2b: zeigen eine zweite Ausführungsform der erfindungsgemäßen Positionsmessvorrichtung, des erfindungsgemäßen Stellwerkzeugs und des erfindungsgemäßen Systems.

### Beschreibung der Ausführungsformen

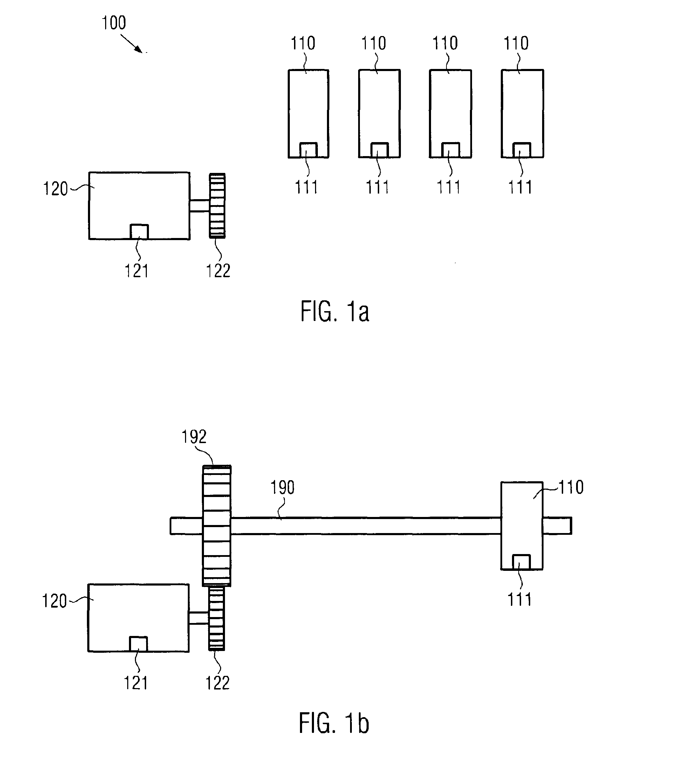

Fig. 1a zeigt eine erste Ausführungsform der erfindungsgemäßen Positionsmessvorrichtung 110, des erfindungsgemäßen Stellwerkzeugs 120 und des erfindungsgemäßen Systems 100.

Die Positionsmessvorrichtung 110 ist dabei als Drehgeber ausgebildet, welcher die Winkellage einer Welle 190 erfassen kann. Die Positionsmessvorrichtung 110 umfasst eine Positionsmessvorrichtungs-Schnittstelle 111 zum drahtlosen Senden von Steuersignalen und/oder Daten an das Stellwerkwerkzeug 120. Das Stellwerkzeug 120 umfasst einen beispielsweise mit einer Batterie betriebenen oder mit einem durch ein Stromkabel an das elektrische Netz angeschlossenen Motor. Weiterhin umfasst das Stellwerkzeug 120 eine Stellwerkzeug-Schnittstelle 121. Über diese Stellwerkzeug-Schnittstelle 121 kann das Stellwerkzeug 120 drahtlos Steuersignale und/oder Daten von der Positionsmessvorrichtungs-Schnittstelle 111 der Positionsmessvorrichtung 110 empfangen.

Das System 100 besteht aus mehreren derartigen Positionsmessvorrichtungen 110 und einem Stellwerkzeug 120.

In Fig. 1b ist gezeigt, wie die Positionsmessvorrichtungen 110 an einer jeweiligen Welle 190 angeordnet werden können, deren Position (Drehwinkel) erfasst und eingestellt werden soll. Da die Funktionsweise eines Drehgebers hinsichtlich der Winkelmessung einer Welle hinreichend bekannt ist, wird hier nicht näher darauf eingegangen. In dieser Ausführung ist das Stellwerkzeug mit einem Zahnradaufsatz 122 versehen, der mit einem Zahnrad 192 der Welle in Eingriff gebracht werden kann. Dabei kann das Stellwerkzeug 120 beispielsweise durch eine geeignete Haltevorrichtung arretiert werden.

Wenn die Welle zur Verstellung eines damit gekoppelten Maschinenelements um einen bestimmten Betrag in eine bestimmte Richtung gedreht werden soll, übermittelt die jeweilige Positionsmessvorrichtung 110 über die jeweilige Positionsmessvorrichtungs-Schnittstelle 111 und die Stellwerkzeug-Schnittstelle 121 drahtlos Steuersignale und/oder Daten an das Stellwerkzeug 121, wodurch bewirkt wird, dass sich der Motor in dem Stellwerkzeug 121 so lange mit gesteuerter Geschwindigkeit (Drehgeschwindigkeit) in die geeignete Richtung dreht, bis die einzustellende Position der Welle 190 erreicht ist. Die Geschwindigkeit kann dabei zeitweise konstant sein und sich bei Annäherung an eine erwünschte Soll-Position verringern.

Die drahtlose Steuersignal- und/oder Datenübertragung ist dabei als Funkübertragung realisiert. Insbesondere kann dies eine Bluetooth-Übertragung sein. Eine andere Möglichkeit ist eine Steuersignal- und/oder Datenübertragung mittels infraroter Strahlung.

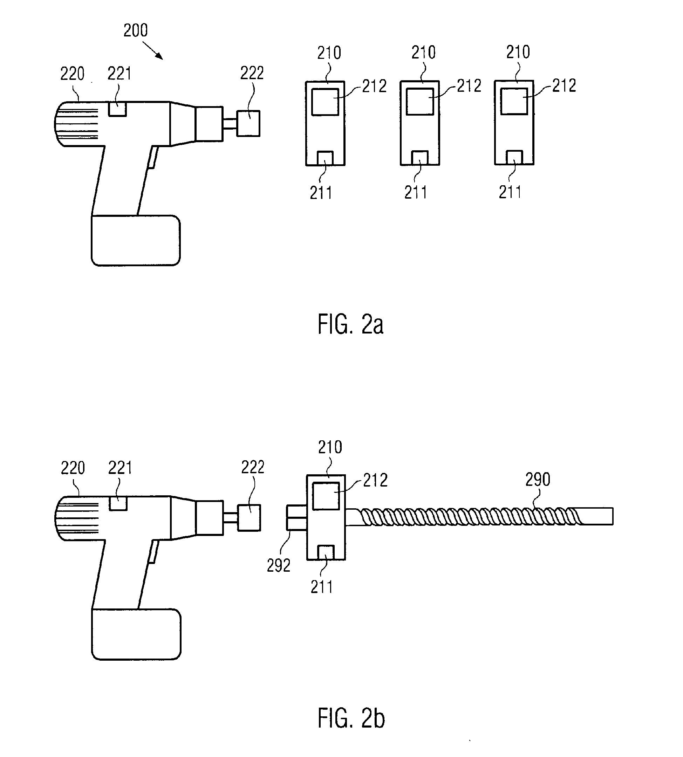

Fig. 2a zeigt eine zweite Ausführungsform der erfindungsgemäßen Positionsmessvorrichtung 210, des erfindungsgemäßen Stellwerkzeugs 220 und des erfindungsgemäßen Systems 200.

Die Positionsmessvorrichtung 210 ist darin als Multiturn-Drehgeber ausgebildet, welche die Winkellage einer jeweiligen Spindel 290 erfassen kann. Die Positionsmessvorrichtung 210 umfasst eine Positionsmessvorrichtungs-Schnittstelle 211 zum drahtlosen Senden von Steuersignalen und/oder Daten an das Stellwerkwerkzeug 220. Das Stellwerkzeug 220 besteht hier aus einem Akkuschrauber. Weiterhin umfasst das Stellwerkzeug 220 eine Stellwerkzeug-Schnittstelle 221. Über diese Stellwerkzeug-Schnittstelle 221 kann das Stellwerkzeug 220 drahtlos Steuersignale und/oder Daten von der Positionsmessvorrichtungs-Schnittstelle 211 der Positionsmessvorrichtung 210 empfangen.

Das System besteht aus mehreren Positionsmessvorrichtungen 210 und einem Stellwerkzeug 220.

In Fig. 2b ist gezeigt, wie die Positionsmessvorrichtungen 210 an das Ende einer jeweiligen Welle 290 gekoppelt werden können, deren Position (Drehwinkel) erfasst und eingestellt werden soll. In dieser Ausführung ist das Stellwerkzeug mit einem Aufsatz 222 versehen, der auf einen Mehrkant 292 der Welle aufgesetzt werden kann. Zudem ist in dieser Ausführungsform die Welle 290 als Spindel ausgebildet.

Die Funktionsweise des Systems 200 ist ansonsten die gleiche wie die bezüglich der ersten Ausführungsform beschriebene. Jedoch umfasst jede Positionsmessvorrichtung 210 in der zweiten Ausführungsform jeweils eine Anzeigevorrichtung 212 zur Anzeige von Positionsmesswerten für die visuelle Kontrolle.

## Patentansprüche

1. Positionsmessvorrichtung (110; 210) zur Erfassung von Positionsmesswerten einer Welle (190; 290), umfassend:
eine Positionsmessvorrichtungs-Schnittstelle (111; 211), die zum drahtlosen Senden von Steuersignalen und/oder Daten an ein Stellwerkwerkzeug (120; 220) ausgebildet ist.

2. Positionsmessvorrichtung nach Anspruch 1, worin die Positionsmessvorrichtungs-Schnittstelle (111; 211) weiterhin zum drahtlosen Empfangen von Steuersignalen und/oder Daten von dem Stellwerkzeug (120; 220) ausgebildet ist.

3. Positionsmessvorrichtung nach einem der vorhergehenden Ansprüche, worin die Positionsmessvorrichtung (110; 210) weiterhin zum Senden einer Identifikation der Positionsmessvorrichtung (110; 210) und/oder eines Ist-Werts der Wellenposition und/oder eines Soll-Werts der Wellenposition über die Positionsmessvorrichtungs-Schnittstelle (111; 211) an das Stellwerkzeug (120; 220) ausgebildet ist.

4. Positionsmessvorrichtung nach einem der vorhergehenden Ansprüche, worin die Positionsmessvorrichtung (110; 210) zum Übertragen von Steuersignalen für einen Linkslauf und/oder einen Rechtslauf und/oder eine Geschwindigkeit über die Positionsmessvorrichtungs-Schnittstelle (111; 211) an das Stellwerkzeug (120; 220) ausgebildet ist.

5. Positionsmessvorrichtung nach einem der vorhergehenden Ansprüche, worin die Positionsmessvorrichtung (110; 210) eine Anzeigevorrichtung (212), in Kombination mit Anspruch 3 zur Anzeige der Positionsmesswerte und/oder des Ist-Werts und/oder des Soll-Werts, umfasst.

6. Positionsmessvorrichtung nach einem der vorhergehenden Ansprüche, worin die Positionsmessvorrichtung zur Erfassung von Positionsmesswerten einer Spindel (290), insbesondere einer Trapezspindel oder einer Kugelrollspindel geeignet ist, die zur Verstellung eines Maschinenelements dient.

7. Positionsmessvorrichtung nach einem der vorhergehenden Ansprüche, worin die Positionsmessvorrichtung (110; 210) zum Anordnen an einer beliebigen Stelle der Welle (290) ausgebildet ist.

8. Positionsmessvorrichtung nach einem der vorhergehenden Ansprüche, worin die Positionsmessvorrichtungs-Schnittstelle (111; 211) als Funk-Schnittstelle und/oder Infrarot-Schnittstelle und/oder Bluetooth-Schnittstelle ausgebildet ist.

9. Positionsmessvorrichtung nach einem der vorangehenden Ansprüche, worin die Positionsmessvorrichtung (110; 210) zum Einbinden in ein drahtloses Kommunikationsnetzwerk ausgebildet ist.

10. Positionsmessvorrichtung nach einem der vorangehenden Ansprüche, worin die Positionsmessvorrichtung (110; 210) einen Drehgeber, insbesondere ein Multiturn-Drehgeber umfasst.

11. Stellwerkzeug (120; 220) zum Einstellen der Position einer Welle, umfassend:
eine Stellwerkzeug-Schnittstelle (121; 221), die zum drahtlosen Empfangen von Steuersignalen und/oder Daten von einer Positionsmessvorrichtung (110; 210) ausgebildet ist.

12. Stellwerkzeug nach Anspruch 11, worin die Stellwerkzeug-Schnittstelle (121; 221) weiterhin zum drahtlosen Senden von Steuersignalen und/oder Daten an die Positionsmessvorrichtung (110; 210) ausgebildet ist.

13. Stellwerkzeug nach einem der vorangehenden Ansprüche, worin das Stellwerkzeug (120; 220) weiterhin zum Empfangen von einer Identifikation der Positionsmessvorrichtung (110; 210) und/oder Positionsmesswerten und/oder eines Ist-Werts und/oder eines Soll-Werts der Wellenposition von der Positionsmessvorrichtung (110; 210) über die Stellwerkzeug-Schnittstelle (121; 221) und/oder deren Speicherung ausgebildet ist.

14. Stellwerkzeug nach einem der vorangehenden Ansprüche, worin das Stellwerkzeug (120; 220) dazu ausgebildet ist, bei Empfang von Steuersignalen für einen Linkslauf und/oder einen Rechtslauf und/oder eine Geschwindigkeit von der Positionsmessvorrichtung (110; 210) die Einstellung der Position der Welle entsprechend vorzunehmen.

15. Stellwerkzeug nach einem der vorangehenden Ansprüche, worin das Stellwerkzeug (120; 220) eine Anzeigevorrichtung, in Kombination mit Anspruch 13 zur Anzeige der Identifikation der Positionsmessvorrichtung (110; 210) und/oder der Positionsmesswerte und/oder des Ist-Werts und/oder des Soll-Werts, umfasst.

16. Stellwerkzeug nach einem der vorangehenden Ansprüche, worin das Stellwerkzeug ein motorbetriebenes Dreh-Element (122; 222) umfasst.

17. Stellwerkzeug nach einem der vorangehenden Ansprüche, worin das Stellwerkzeug ein Akkuschrauber (120; 220) ist.

18. Stellwerkzeug nach einem der vorangehenden Ansprüche, worin das Stellwerkzeug an ein Ende (292) der Welle (290) koppelbar ist.

19. Stellwerkzeug nach einem dem vorangehenden Ansprüche, worin die Stellwerkzeug-Schnittstelle (121; 221) als Funk-Schnittstelle und/oder Infrarot-Schnittstelle und/oder Bluetooth-Schnittstelle ausgebildet ist.

20. Stellwerkzeug nach einem der vorangehenden Ansprüche, worin das Stellwerkzeug (120; 220) zum Einbinden in ein drahtloses Kommunikationsnetzwerk ausgebildet ist.

21. System (100; 200), umfassend:
mehrere Positionsmessvorrichtungen (110; 210) nach einem der Ansprüche 1 bis 10, und
ein Stellwerkzeug (120; 220) nach einem der Ansprüche 11 bis 20.

22. System nach einem der vorangehenden Ansprüche, worin eine Zuordnung des Stellwerkzeugs (120; 220) zur jeweiligen Positionsmessvorrichtung (110; 210)
über eine Signalstärke der drahtlosen Datenübertragung, und/oder
über eine ldentifikations-Kodierung der jeweiligen Positionsmessvorrichtung (110; 210), und/oder
durch ein Anschalten der jeweiligen Positionsmessvorrichtungs-Schnittstelle (111; 211)
herstellbar ist.
